# EUROPÄISCHE PATENTSCHRIFT

(11) **EP 0 858 671 B1**
(45) Veröffentlichungstag und Bekanntmachung des Hinweises auf die Patenterteilung: **04.08.1999**
(21) Anmeldenummer: 96945702.7
(22) Anmeldetag: 30.10.1996
(51) Int. Cl.: H01H 21/00

(54) **ELEKTRISCHER SCHALTER**
ELECTRIC SWITCH
COMMUTATEUR ELECTRIQUE

(30) Priorität: 02.11.1995 DE 19540803
(43) Veröffentlichungstag der Anmeldung: 19.08.1998
(73) Patentinhaber: EATON CONTROLS GmbH & Co. KG, 55445 Langenlonsheim (DE)
(72) Erfinder: LENG, Peter, D-65428 Rüsselsheim (DE); RUEGENBERG, Roland, D-55411 Bingen (DE)
(74) Vertreter: Becker, Bernd, Dipl.-Ing.
(86) Internationale Anmeldenummer: DE9602083
(87) Internationale Veröffentlichungsnummer: WO9716840

(56) Entgegenhaltungen:
- DE-A- 2 609 630
- DE-A- 3 603 820
- DE-C- 3 839 911

## Beschreibung

Die Erfindung bezieht sich auf einen elektrischen Schalter, insbesondere Lenkstockschalter für Kraftfahrzeuge, mit einem in einem Gehäuse um ein Lager verschwenkbaren, Schaltkontakte beeinflußenden Schalthebel, dem mindestens eine Schaltstellung zugeordnet ist, in die der Schalthebel unter der Wirkung einer Feder zurückgeführt und gehalten wird.

Aus der DE 38 39 911 C1 ist ein derartiger elektrischer Schalter bekannt. Bei der Betätigung des Schalters schwenkt ein mit dem Schalthebel verbundenes, ein Kontaktelement betätigendes Schaltglied um ein gehäusefestes Lager. Eine im Schaltglied verschiebbar gehalterts Rastelement stützt sich federbelastet an einer gehäusefesten Rastkulisse ab. Die Rastkulisse umfaßt bei dem als Blinkerschalter ausgeführten Lenkstockschalter mindestens drei verrastbare Schaltpositionen, wobei die mittlere Schaltposition die Neutralstellung darstellt, in die der Schalthebel nach Aufhebung der Verrastung selbsttätig zurückschaltet. Um ein sicheres Zurückschalten zu gewährleisten, muß die die Rastrolle beaufschlagende Druckfeder ausreichend stark sein, wodurch die auf den Schalthebel wirkende Beschleunigung so groß wird, daß der Schalthebel mit hoher Geschwindigkeit in Richtung Neutralposition läuft. Der Schalthebel schwingt sonach darüber hinaus und pendelt sich nach mehrmaligem Überschwingen in der Neutralposition ein. Durch die hohe Geschwindigkeit des Schalthebels wird die große Momentan-Kraftdifferenz in der Neutralposition schlagartig aufgebracht, was zu lauten unangenehmen Geräuschen, insbesondere bei Kunststoffbauteilen, führt. Bei langen bzw. schweren Schalthebeln, z.B. bei Lastkraftwagen, kommt es sogar vor, daß der Schalthebel durch Überschwingung die entgegengesetzte Rastposition erreicht. Dabei werden die entgegengesetzten Schaltkontakte beaufschlagt, was beim Blinkerschalter das Aufleuchten der entgegengesetzten Blinkleuchten bewirkt. Dies kann besonders auf der Autobahn zu gefährlichen Bremsmanövern führen, da der nachfolgende Verkehr damit rechnet, daß das gerade eingescherte Fahrzeug wieder auf die Überholspur ausschert.

Der Erfindung liegt die Aufgabe zugrunde, einen elektrischen Schalter der eingangs genannten Art zu schaffen, der sicher in der Kontaktierung ist und keine unangenehmen Schaltgeräusche erzeugt.

Diese Aufgabe wird erfindungsgemäß dadurch gelöst, daß das Lager des Schalthebels mit einem die Schwenkbewegung des Schalthebels dämpfenden Medium benetzt ist.

Durch diese Maßnahme wird die Rückstellbewegung des Schalthebels gedämpft, wobei die Rückstellenergie abhängig von der Schalthebelgeschwindigkeit durch das dämpfende Medium aufgenommen wird und das Rastelement nicht in die Neutralposition der Rastkulisse schlägt, sondern an der Rastkulisse entlang zur Neutralposition gleitet. Hierdurch wird also ein Überschwingen durch die Neutralposition des Schalthebels ausgeschlossen. Um das Lager ist also eine Dämpfungseinrichtung konzentrisch angeordnet.

Nach einer vorteilhaften Ausgestaltung der Erfindung ist das dämpfende Medium eine Flüssigkeit mit einer hohen kinematischen Zähigkeit. Dadurch ergibt sich eine leichte und einfache Dosierung der benötigten Menge, und das Aufbringen der Dämpfflüssigkeit ist ohne Vorrichtungen möglich.

Das Schalterinnere sowie die Schaltkontakte sollen vor unerwünschter Verschmutzung durch das dämpfende Medium geschützt werden, wobei keine aufwendigen Dichtmaßnahmen durchgeführt werden sollen. Daher ist bei einer alternativen Ausführung der Erfindung das dämpfende Medium ein Fett mit einer hohen kinematischen Zähigkeit.

Damit der Schalthebel ausreichend genau gelagert wird und die auf das Lager einwirkenden Kräfte sicher übertragen werden, besteht nach einer vorteilhaften Weiterbildung der Erfindung das Lager des Schalthebels aus konzentrisch angeordneten Gleitflächen, zwischen denen das dämpfende Medium vorgesehen ist.

Um ein fein abgestimmtes Dämpfen zu erreichen, besteht zweckmäßigerweise das Lager des Schalthebels aus die Führung des Schalthebels bewirkenden Führungsflächen und aus mindestens einer das dämpfende Medium aufnehmenden Dämpfungskammer, die von den Führungsflächen gebildet wird. Bei dieser Ausgestaltung wird außerdem das dämpfende Medium nicht unter dem Einfluß einer Lagerkraft aus dem Lager gepreßt.

Nach einer vorteilhaften Ausführungsform weist die Dämpfungskammer eine axiale Ausrichtung zum Lager auf. Dies gewährleistet eine einfache und preiswerte Herstellbarkeit. Zudem wird das dämpfende Medium gleichmäßig beansprucht.

Nur eine nur geringe Menge des dämpfenden Mediums bei gleichzeitiger größtmöglicher Auslaufsicherheit ist notwendig, wenn bevorzugt das Lager des Schalthebels aus konzentrisch ineinandergreifenden Gleitflächen besteht, wobei zwischen den axialen Planflächen der Gleitflächen eine das dämpfende Medium aufnehmende Dämpfungskammer vorgesehen ist.

Bei einer weiteren Ausgestaltung der Erfindung ist in mindestens einer der beabstandeten Planflächen der Lagerflächen, mindestens ein den Fluß des dämpfenden Mediums einengender Dämpfungsspalt vorhanden. Der Dämpfungsspalt ist auf einfache Weise durch Anformen eines Verdrängungskörpers an einem Ende der Gleitfläche realisierbar. Durch diesen Dämpfungsspalt strömt entsprechend seiner Ausgestaltung eine bestimmte Menge dämpfenden Mediums gedrückt, was eine bestimmte hohe Dämpfung des Schalthebels zur Folge hat. Durch gezieltes Anbringen des Verdrängungskörpers kann die hohe Dämpfung gezielt in einen gewünschten Bereich geschoben werden.

Damit die von der Rastrolle ausgeübten Kräfte nicht die Dämpfung beeinflussen, weist nach einer alternativen Ausgestaltung der Erfindung die Dämpfungskammer eine punktsymmetrische Ausrichtung zum Lager auf. Somit wirken beim Verschwenken des Schalthebels nicht die unterschiedlichen Kräfte des Rastelementes, welche durch die unterschiedlichen Raststellungen hervorgerufen werden, auf die Dämpfung ein.

Durch das Unterteilen in sich radial aufteilende Kammern finden außerdem in den Kammern unterschiedliche Scherkräfte des dämfenden Mediums statt. Dies wird durch die unterschiedliche Dicke des dämpfenden Mediums hervorgerufen. Bevorzugt ist daher in der Dämpfungskammer mindestens ein radial verlaufender, den Fluß des dämpfenden Mediums einengender Dämpfungsspalt vorgesehen.

Nach einer vorteilhaften Ausführungsform ist der Dämpfungsspalt durch einen gehäuse- und/oder schalthebelfesten Ansatz, der beim Verschwenken des Schalthebels einen gleichmäßigem Abstand zur gegenüberliegenden Gleitfläche aufweist, gebildet. Somit ist eine genaue Herstellung gewährleistet. Bei einer einstückigen Anformung ist zudem eine preiswerte Fertigung gegeben, da keine gesonderte Montage mehr notwendig ist.

Um beim Schalten eine veränderliche Dämpfung zu erreichen, ist der Dämpfungsspalt bevorzugt durch einen gehäuse- und/oder schalthebelfesten Ansatz, der beim Verschwenken des Schalthebels einen sich verändernden Abstand zur gegenüberliegenden Gleitfläche einnimmt, gebildet. Formtechnisch ist auch dies einfach zu realisieren, indem eine Wand einer Dämpfungskammer unkonzentrisch angeordnet ist.

Damit die Formelemente werkzeugtechnisch einfach herstellbar sind, ist zweckmäßigerweise der Ansatz durch eine eine Spitze aufweisende Anformung gebildet.

Ein gleichmäßiger Volumenstrom des dämpfenden Mediums bewirkt ein gleichmäßiges Schaltgefühl. Dies wird erreicht, wenn nach einer Ausgestaltung der Erfindung der Ansatz durch eine kontinuierlich verrundete Form eines Exzenters gebildet ist. Dabei kommt es im Volumenstrom zu keinen Verwirbelungen, welche das Schaltgefühl beeinträchtigen würden.

Damit der Schalthebel nicht verkantet und keine einseitige Belastung erfährt, besteht zweckmäßigerweise das Lager des Schalthebels aus zwei koaxial beabstandeten Lagerstellen. Somit ist ferner eine erhöhte Lebensdauer des Schalters gegeben.

Wirkt die Belastung auf das Lager und somit auf die Dämpfungskammern nur in einer Richtung und soll die Dämpfung nur eine Hauptrichtung aufweisen, so weisen bevorzugt die Dämpfungskammern und/oder die Dämpfungsspalten in beiden Lagerstellen die gleiche Ausrichtung auf. Wenn die Belastung aus unterschiedlichen Richtungen wirkt oder wenn der Schalthebel in verschiedene Richtungen bewegt wird, dann weisen bevorzugt die Dämpfungskammern und/oder die Dämpfungsspalten in beiden Lagerstellen eine unterschiedliche Ausrichtung auf.

Um nur eine geringe Menge des dämpfenden Mediums zu benötigen, das zudem nur in einem begrenzten Bereich eingesetzt wird, ist nach einer vorteilhaften Weiterbildung der Erfindung die Dämpfungskammer durch einen gehäusefesten, mittig den Ansatz aufweisenden Kreisringabschnitt gebildet, in den schalthebelfeste Kreissegmente eintauchen, die das dämpfende Medium durch den Dämpfungsspalt von einer Teilkammer in die gegenüberliegende Teilkammer drücken. Da hierbei das im großen Querschnitt verdrängte dämpfende Medium durch den kleinen Querschnitt des Dämpfungsspaltes gedrückt wird, ergibt sich eine hohe Dämpfung. Durch Verändern des Dämpfungsspaltes kann hierbei die Stärke der Dämpfung leicht verändert werden.

Bei einer weiteren Ausgestaltung der Erfindung besteht das Lager des Schalthebels aus konzentrisch ineinandergreifenden Gleitflächen, wobei mindestens eine der Gleitflächen axial ausgerichtete Nuten besitzt. Hierdurch sind zum einen großvolumige Dämpfungskammern vorhanden die mit schmalen Dämpfungskammern verbunden sind. Je nach Stellung des Schalthebels ist sonach eine unterschiedliche Dämpfung gegeben.

Um eine unterschiedlich noch ausgeprägtere Dämpfung zu erhalten, bei der die Lagerung weiterhin gewährleistet wird sind bevorzugt beide Gleitflächen mit Nuten ausgerüst, wobei die Nuten einer Gleitfläche schmaler als die Nuten der gegenüberliegenden Gleitfläche sind. Durch die unterschiedlich breiten Nuten ist immer eine ausreichende Überdeckung der Gleitflächen vorhanden. Beim Zusammenschieben zweier Gleitflächen kommt der innere Reibungswiderstand des dämpfenden Mediums voll zur Wirkung, und auch die Scherkräfte des dämpfenden Mediums müssen überwunden werden.

Die Scherkräfte des dämpfenden Mediums werden nochmals erhöht und haben somit eine weitere Auswirkung auf das Schaltverhalten, wenn nach einer vorteilhaften Ausgestaltung an mindestens einer Gleitfläche mindestens ein Dämpfungsbogen angeformt ist, der in eine Nut der gegenüberliegenden Lagerfläche eintaucht. Außerdem kann hierbei eine Verformung im elastischen bzw. federnden Bereich an den Gleitflächen stattfinden, wodurch durch eine Kombination der unterschiedlichen Ausgestaltungen für jede Anforderung eine Lösung bereitgestellt wird.

Um eine kostengünstige Großserienfertigung zu erhalten, bestehen bevorzugt die das dämpfende Medium aufnehmenden und damit zusammenwirkenden Bauelemente aus Kunststoff und sind spritztechnisch hergestellt. Dabei ist die Herstellung von ausreichender Genauigkeit ohne Nacharbeit möglich.

Damit bei der Montage des Schalters das Schalterinnere, insbesondere die Schaltkontakte, nicht mit dem dämpfenden Medium verschmutzt werden, ist nach einer weiteren Ausgestaltung jeder Dämpfungskammer ein Ventil zugeordnet, über das die Dämpfungskammer nach der Montage mit dem dämpfenden Medium befüllt wird. Erst wenn der Schalter die elektrische Prüfung bestanden hat, erfolgt die Füllung der Dämpfungskammer. So ist es möglich, den Schalter nach nicht bestandener Prüfung zu öffnen und zu reparieren, ohne daß das Schalterinnere durch das dämpfende Medium verschmutzt wird.

Der der Erfindung zugrunde liegende Gedanke wird in der nachfolgenden Beschreibung anhand mehrerer Ausführungsbeispiele, die in der Zeichnung dargestellt sind, näher erläutert. Es zeigt:

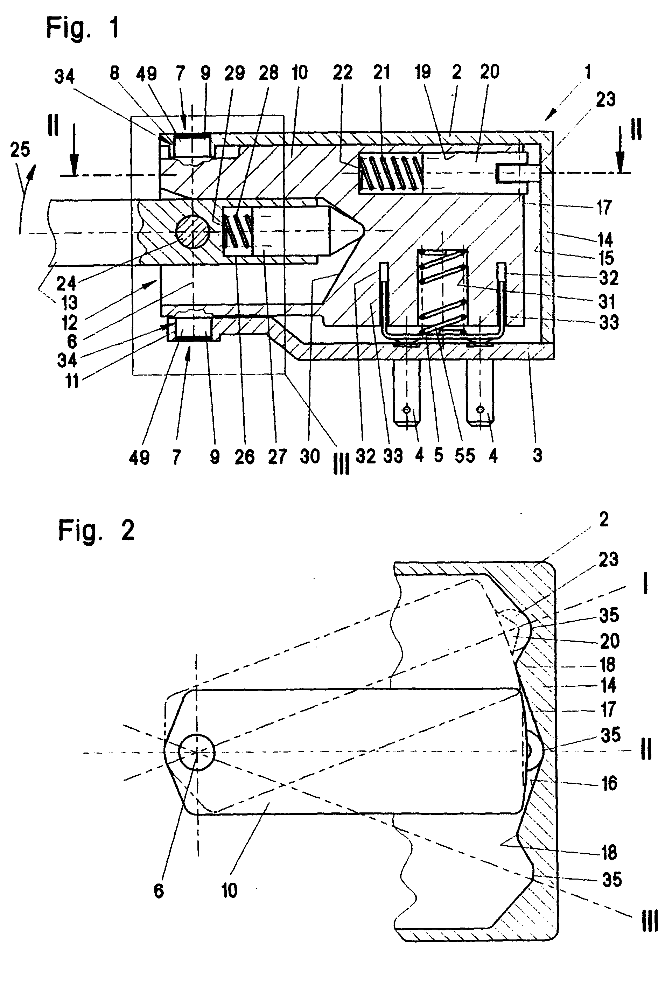

- Fig. 1: einen Schnitt durch einen erfindungsgemäßen Schalter,
- Fig. 2: einen Teilschnitt durch den Schalter nach Fig. 1 in Richtung der Pfeile II-II,
- Fig. 3: eine vergrößerte Darstellung der Einzelheit III gemäß Fig. 1,
- Fig. 4: eine vergrößerte Darstellung der Einzelheit IV gemäß Fig. 3,
- Fig. 5: einen Schnitt durch Fig. 4 in Richtung der Pfeile V-V,
- Fig. 6: eine alternative Ausführung der Darstellung nach Fig. 3,
- Fig. 7: einen Teilschnitt gemäß Fig. 6, in Richtung der Pfeile VII-VII in eine Ebene geklappt,
- Fig. 8: eine alternative Ausführung zu Fig. 7,
- Fig. 9: die Ausführung gemäß Fig. 8, wobei die Planflächen um einen bestimmten Winkel gegeneinander verschwenkt sind,
- Fig. 10: eine weitere alternative Ausgestaltung zu Fig. 3,
- Fig. 11: die vergrößerte Darstellung der Einzelheit XI gemäß Fig. 10,
- Fig. 12: einen Schnitt durch Fig. 11 in Richtung der Pfeile XII-XII,
- Fig. 13: einen Schnitt durch Fig. 11 in Richtung der Pfeile XIII-XIII,
- Fig. 14: eine alternative Ausgestaltung zu Fig. 12.
- Fig. 15: eine alternative vergrößerte Darstellung der Einzelheit III gemäß Fig. 1 und
- Fig. 16: einen Schnitt durch Fig. 15 in Richtung der Pfeile XVI -XVI in vergrößerter Darstellung.

Der elektrische Schalter 1 weist ein im wesentlichen rechtekkiges Gehäuse 2 auf, an dem sich gehäusefest ein Sockel 3 befindet. In den Sockel 3 sind Anschlußstecker 4 eingelassen, die in Wirkverbindung mit einer Kontaktbrücke 5 stehen. Koaxial befinden sich im Gehäuse 2 und im Sockel 3 auf einer Achse 6 je ein Lager 7. Die Lagerpaarung ist einerseits durch eine Lagerbohrung 8 im Gehäuse 2 mit entsprechendem in die Lagerbohrung 8 eintauchenden, am Schaltglied 10 angeordneten Lagerzapfen 9 und andererseits durch eine Lagerbohrung 11 im Sockel 3, in die ein weiterer Lagerzapfen 9 des Schaltgliedes 10 eintaucht, realisiert. Die Achse 6 befindet sich in der Nähe einer offenen Seite 12 des Gehäuses 2, durch die ein Schalthebel 13 hindurchragt. Auf der der Achse 6 gegenüberliegenden Seite liegt die Gehäusewand 14, welche senkrecht zum Sockel 3 ausgerichtet ist. In die Innenseite 15 der Gehäusewand 14 ist eine Rastkulisse 16 eingearbeitet. Das Schaltglied 10, das innerhalb der Rastkulisse 16 die stabilen Schaltstellungen I, II und III einnehmen kann, schwenkt um die Achse 6 und seine Vorderkante 17 schwenkt vor den Spitzen 18 der Rastkulisse 16. In das Schaltglied 10 ist eine Bohrung 19 von der Vorderkante 17 her eingelassen. In diese Bohrung 19 ist ein Raststein 20 unter Zwischenschaltung einer Druckfeder 21 eingesetzt. Die Druckfeder 21 stützt sich am Boden 22 der Bohrung 19 ab und drückt den Raststein 20 in Richtung der Rastkulisse 16. Auf dem der Rastkulisse 16 zugewandten Ende besitzt der Raststein 20 eine drehbewegliche Rastrolle 23, die auf der Rastkulisse 16 abrollt. Quer zur Achse 6 ist der Schalthebel 13 mit einem Querbolzen 24 im Schaltglied 10 gelagert. Um den Querbolzen 24 ist der Schalthebel 13 in Richtung des Pfeiles 25 betätigbar. Der Schalthebel 13 besitzt an seinem im Schaltglied 10 eingetauchten Ende eine Sackbohrung 26, in die ein Formstein 27 unter Zwischenschaltung einer Druckfeder 28 eingesetzt ist. Die Druckfeder 28 stützt sich am Boden 29 der Sackbohrung 26 ab und drückt den Formstein 27 in Richtung einer in das Schaltglied 10 eingelassenen Tippkulisse 30. Der Formstein 27 stützt sich an der Tippkulisse 30 ab und bewirkt das selbststätige Rückstellen des Schalthebels 13 entgegen der Richtung des Pfeiles 25 nach dem Wegfall der Betätigungskraft.

Im Schaltglied 10 ist seitlich die Kontaktbrücke 5 angeordnet. Der Kontaktbrücke 5 gegenüberliegend sind im Schaltglied 10 eine Grundbohrung 31 und zwei Schenkelbohrungen 32 eingelassen. Mit ihren Schenkeln 33 taucht die Kontaktbrücke 5 in die Schenkelbohrungen 32 ein und wird somit beim Verschwenken des Schaltgliedes 10 um die Achse 6 mitgenommen. Für die nötige Anpreßkraft der Kontaktbrücke 5 auf die in den Sockel 3 eingelassenen Anschlußstecker 4 sorgt eine in die Grundbohrung 31 eingesetzt Druckfeder 55, die sich am Boden der Grundbohrung 31 abstützt und gegen die Kontaktbrücke 5 drückt.

Eine Dämpfung ist für jedes Lager des Schalthebels 13 einsetzbar,und zwar sowohl für das direkte Lager (Querbolzen 24) mit dem der Schalthebel 13 im Schaltglied 10 festgelegt ist, als auch für das indirekte Lager 7, mit dem der Schalthebel 13 im Gehäuse 2 festgelegt ist. Der Einfachheit halber wird nachfolgend nur die indirekte Lagerung beschrieben.

Das Lager 7 des Schalthebels 13 ist mit einem die Schwenkbewegung des Schalthebels 13 dämpfenden Medium 34 benetzt. Dabei ist die Lagerpaarung so ausgeführt, daß überall ein gleichmäßiger Spalt für die Aufnahme des dämpfenden Mediums 34 vorhanden ist, das entweder eine Flüssigkeit oder ein Fett mit einer hohen kinematischen Zähigkeit ist. Die dämpfende Wirkung kommt richtig zur Geltung, wenn beim Schalten der Raststein 23 über eine der Spitzen 18 der Rastkulisse 16 hinwegkommt. Durch die Wirkung der Druckfeder 21 schnellt der Raststein 20 und mit ihm der Schalthebel 13 in die nächste Senke 35 der Rastkulisse 16. Auf dem Weg zur Senke 35 erfolgt eine geschwindigkeitsabhängige Energieumwandlungung, durch die der Schalthebel 13 bzw. der Raststein 20 gebremst in der Senke 35 zu liegen kommt und nicht infolge der Massenträgheit darüber hinausschwingt. Damit überall ein gleichmäßig dicker Film von dämpfenden Medium 34 vorliegt, besteht das Lager 7 des Schalthebels 13 aus konzentrisch angeordneten Gleitflächen 36, zwischen denen sich das dämpfende Medium 34 befindet.

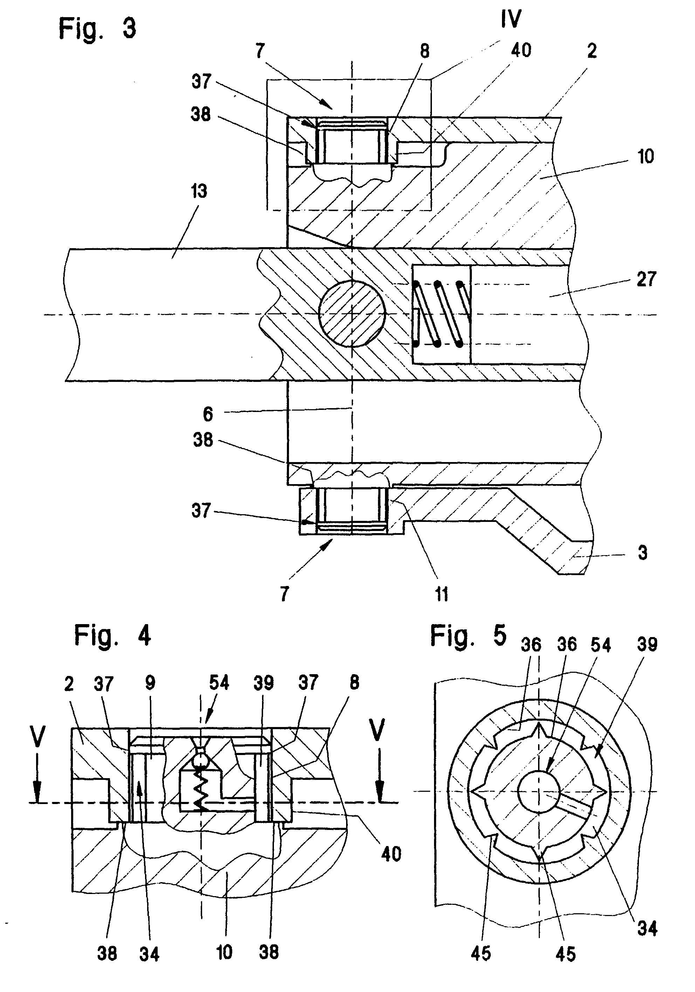

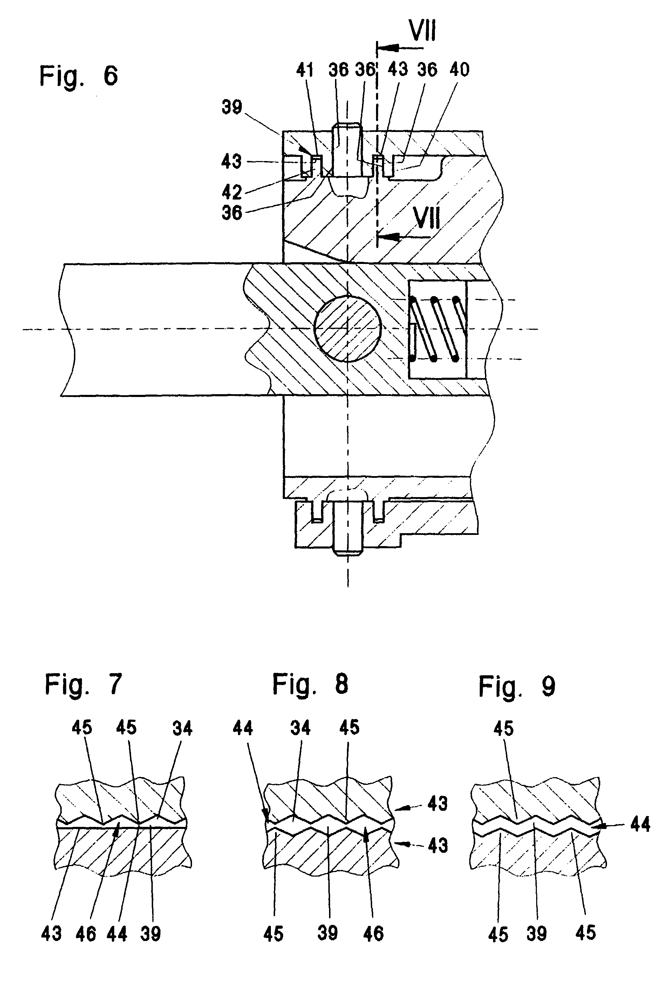

Die von dem Raststein 20 auf das Lager 7 einwirkende Kraft wird durch Führungsflächen 37 direkt in die Lagerbohrungen 8 und 11 bzw. in die angrenzenden dazu senkrechten Stützflächen 38 eingeleitet. Die Gleitflächen 36 sind voneinander beabstandet, und der Raum dazwischen ist eine Dämpfungskammer 39, die das dämpfende Medium 34 aufnimmt. Bei den in den Fig. 3 und 6 dargestellten Ausführungsbeispielen besitzt die Dämpfungskammer 39 eine axiale Ausrichtung zum Lager 7. Die Dämpfungskammer 39 wird hierbei durch eine Lagerbohrung 8 bzw. 11 und der Gleitfläche 36 am Lagerbolzen 9 des Schaltgliedes 10 gebildet. Durch einen an der Wand des Gehäuses 2 angeformten Wulst 40 wird die Länge der Dämpfungskammer 39 vergrößert. Die Fig. 6 zeigt eine andere Ausgestaltung der axialen Dämpfungskammer 39. In den Wulst 40 ist ein Kreisring 41 eingelassen, in den ein am Schaltglied 10 angeformter Ringansatz 42 eingesetzt ist. Der Ringansatz 42 ist kürzer als die Tiefe des Kreisringes 41. Diese Elemente bilden die konzentrisch ineinandergreifenden Gleitflächen 36. Die sich an den Gleitflächen 36 anschließenden senkrechten Planflächen 43 sind voneinander beabstandet und bilden mit den freien Abschnitten der Gleitflächen 36 die Dämpfungskammer 39, die durch am Lagerzapfen 9 angeordnete Ansätze 45 mit der Lagerbohrung 8 einen Dämpfungsspalt 44 bildet. Alternativ dazu können auch an der Lagerbohrung 8 Ansätze 45 angebracht sein. Je nach der Tiefe des Eintauchens oder nach der Größe der Durchmesser überwiegt entweder der axiale Anteil oder der radiale Anteil der Dämpfungskammer 39, in dem sich das dämpfende Medium 34 befindet.

In der Fig. 7 ist eine Dämpfungskammer 39 dargestellt, die an einer Planfläche 43 der Gleitflächen 36 einen Dämpfungsspalt 44 besitzt. Der Dämpfungsspalt 44 wird durch einen gehäusefesten Ansatz 45 gebildet, der in die Dämpfungskammer 39 hineinragt. Ober dem Umfang der Planfläche 43 sind mehrere Ansätze 45 hintereinander angeordnet. Jeder Dämpfungsspalt 44 engt den Fluß des dämpfenden Mediums 34 ein. In den zwischen den Ansätzen 45 vorhandenen Kammern 46 kommt es in den Zwischenschichten des dämpfenden Mediums 34 zu einer weiteren Reibung und somit Energieumwandlung. Bei der in den Fig. 8 und 9 dargestellten Dämpfungskammer 39 besitzt sowohl die gehäuse- als auch die schalthebelfeste Planfläche 43 Ansätze 45. Je nach Stellung der Planflächen 43 zueinander ergibt sich ein großer oder ein kleiner Dämpfungsspalt 44.

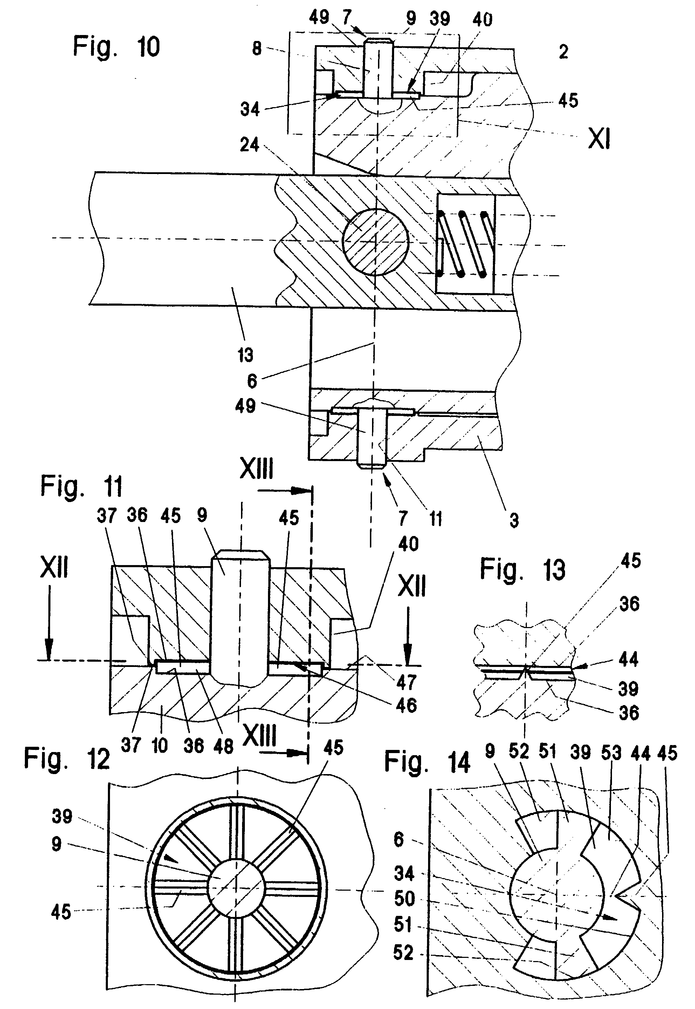

Die Dämpfungskammer 39 weist bei der Ausgestaltung nach Fig. 10 eine radiale bzw. punktsymmetrische Ausrichtung zum Lager 7 auf. Dazu besitzt der Wulst 40 einen größeren Durchmesser, um eine möglichst große, d.h. breite Gleitfläche 36 bzw. Dämpfungskammer 39 zu realisieren. Der Lagerzapfen 9 des Schaltgliedes 10 wird in die gehäusefesten Lagerbohrungen 8 bzw 11 eingesetzt. Am Übergang zwischen dem Lagerzapfen 9 und dem Schaltglied 10 befinden sich die Lagerflächen 36, die mit dem dämpfenden Medium 34 benetzt sind. Damit eine größere Menge dämpfenden Mediums 34 eingebracht werden kann und diese das Innere des Schalters 1 nicht verschmutzt, ist in der Stinseite 46 des Wulstes 40 und in die gegenüberliegende Oberfläche 47 des Schaltgliedes 10 eine Vertiefung 48 eingearbeitet. Die Vertiefung 48 ist von Führungsflächen 37 begrenzt. Zwischen den Lagerflächen 36, d.h. in der Dämpfungskammer 39, ist ein Dämpfungsspalt 44 vorhanden, der den Fluß des dämpfenden Mediums 34 behindert. Auf der schalthebelfesten Seite der Lagerflächen 36 ist dazu ein radial verlaufender Ansatz 45 angeformt, der die Form eines gleichseitigen Dreieckes besitzt. Der Ansatz 45 hat beim Verschwenken des Schalthebels 13 immer einen gleichmäßigen Abstand zur gegenüberliegenden Lagerfläche 36.

Bei der nichtkoaxialen Anbringung des Lagerzapfens 9 am Schaltglied 10 ändert sich beim Verschwenken des Schalthebels 13 der Abstand zwischen dem Ansatz 45 und der gegenüberliegenden Lagerfläche 36 und somit auch der Querschnitt des Dämpfungsspaltes 44 (nicht dargestellt). Beim Verschwenken des Schalthebels 13 verändert sich somit die Dämpfung je nach Stellung des Schalthebels 13. Der Übergang ist noch kontinuierlicher, wenn der Ansatz 45 eine kontinuierlich verrundete Form eines Exzenters (nicht dargestellt) besitzt.

Zur besseren Abstützung des Schaltgliedes 10 und somit des Schalthebels 13 besteht jedes Lager 7 aus zwei voneinander beabstandeten koaxial angeordneten Lagerstellen 49. In den dargestellten Ausführungsbeispielen besitzen die Lagerstellen 49 und mit ihnen die Dämpfungskammern 39 und die Dämpfungsspalte 44 stets die gleiche Ausrichtung. Ebenso ist es jedoch möglich, eine unterschiedliche Ausrichtung in den Lagerstellen 49 anzuordnen. So kann z.B. zwischen dem Lagerzapfen 9 und der Lagerbohrung 11 im Sockel 3 eine axiale Ausrichtung der Lagerflächen 36 und im Bereich des Lagerzapfens 9 und der Lagerbohrung 8 im Gehäuse 2 eine radiale Ausrichtung der Lagerflächen 36 angeordnet sein (nicht dargestellt). Selbstverständlich ist es dabei möglich, die Lagerflächen 36 beliebig mit Dämpfungskammern 39 und Ansätzen 45 zu versehen.

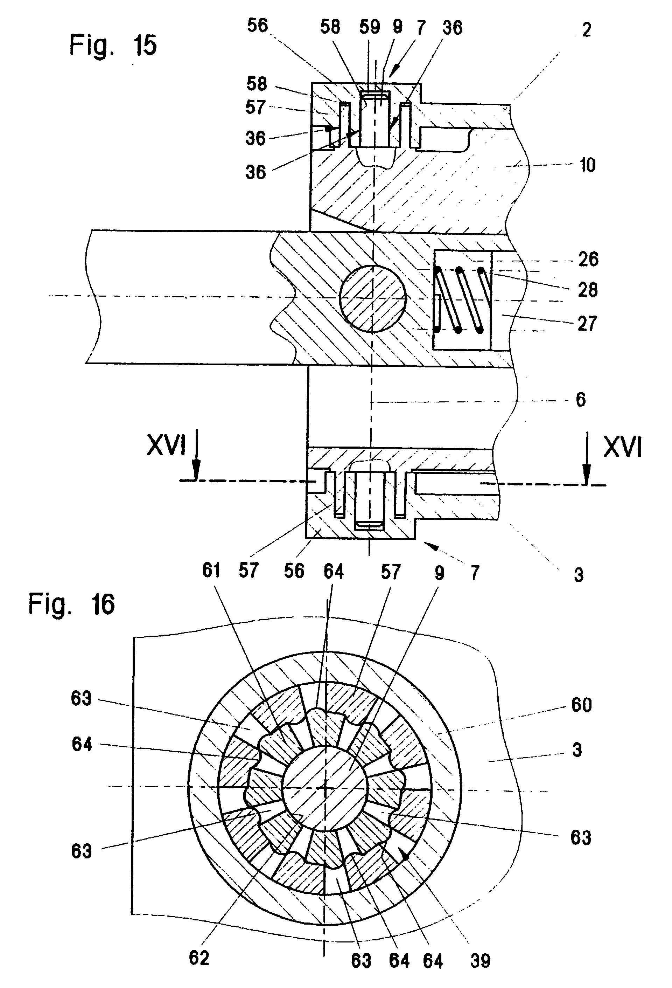

Die Dämpfungskammer 39 nach Fig. 14 weist die Form eines Kreisringabschnittes 50 auf. Mittig ist der Kreisringabschnitt 50 mit dem Ansatz 45 versehen, der die Form eines gleichschenkligen Dreieckes aufweist. Koaxial zum Kreisringabschnitt 50 ist der Lagerzapfen 9 eingesetzt. Am Lagerzapfen 9 sind Kreissegmente 51 angeformt, die symmetrisch im Kreisringabschnitt 50 einliegen und deren Umlaufkante 52 an der Peripherie 53 des Kreisringabschnittes 50 beim Verschwenken des Schalthebels 13 dichtend gleitet. Im mittleren Bereich der Dämpfungskammer 39 befindet sich zwischen den Kreissegmenten 51 das dämpfende Medium 34. Wenn der Schalthebel 13 und somit das Schaltglied 10 um die Achse 6 bewegt wird, wird das dämpfende Medium 34 durch den Dämpfungsspal 44 gepreßt, und es erfolgt eine große Energieumwandlung und somit eine große Dämpfung der Bewegung des Schalthebels 13.

Der Schalter 1 nach den Fig. 15 und 16 weist sowohl am Gehäuse 2 als auch am Sockel 3 eine Ausformung 56 auf, durch die das Lager 7 eine längere Ausdehnung erreicht. Am Schaltglied 10 ist für jedes Lager 7 eine Buchse 57 angeformt, die konzentrisch um den Lagerzapfen 9 vorliegt. In den Ausformungen 56 sind entsprechend jeder Buchse 57 und jedem Lagerzapfen 9 eine diesselben aufnehmende Lagerbohrung 58 eingelassen, wobei die Lagerbohrung 58 länger ist als der Lagerzapfen 9 bzw. die Buchse 57. Dadurch ist das im Lager 7 vorhandene dämpfende Medium über eine Kammer 59 verbunden. Im Schnitt nach Figur 16 ist die weitere Aufteilung der Dämpfungskammer 39 dargestellt. Ein Außenring 60 und ein Innenring 61 sind am Sokkel 3 vorgesehen. In den Raum zwischen dem Außenring 60 und dem Innenring 61 taucht die am Schaltglied 10 angeordnete Buchse 57 ein. Hierbei werden die Lagerflächen 36 von den einander zugewandten Flächen des Innenringes 61 und der Buchse 57 gebildet. Weiterhin besitzt der Innenring 61 eine Ringbohrung 62, in die der am Schaltglied 10 festgelegte Lagerzapfen 9 eintaucht. Der Innenring 61 und die Buchse 57 weisen acht gleichmäßig über den Umfang verteilte Nuten 63 auf. Dabei ist die Breite der Nuten 63 so ausgelegt, daß immer eine Überdeckung zwischen Innenring 61 und Buchse 57 vorhanden ist. Sowohl am Innenring 61 als auch an der Buchse 57 sind Dämpfungsbogen 64 angeformt, die jeweils in Richtung des gegenüberliegenden Teiles vorgesehen sind. Die Dämpfungsbogen 64 sind so breit, daß sie die Breite der jeweils gegenüberliegenden Nut 63 ausfüllen. Beim Betätigen des Schalthebels 13 um die Achse 6 kommen die Dämpfungsbogen 64 in Kontakt zur gegenüberliegenden Fläche, wobei das dämpfende Medium auf ein Minimum zusammengepreßt bzw. auseinandergeschert wird. Die Ausgestaltung ist so gewählt, daß sich bei dieser Konstellation die Paarung immer im elastischen Bereich des Werkstoffes befindet. Außerdem ist es leicht möglich, die zusammenwirkenden Teile federnd zu gestalten, wodurch über die gesammte Lebensdauer des Schalters 1 eine ausreichende Dämpfung gewährleistet ist.

Soweit es die elektrischen Anforderungen und die Bedingungen an die Festigkeit zulassen, sind die Einzelteile des elektrischen Schalters 1 aus Kunststoff hergestellt. Dies trifft auch für die Bauelemente zu, die das dämpfende Medium 34 aufnehmen.

Bei der Darstellung nach Fig. 4 ist im Lagerzapfen 9 ein Ventil 54 eingesetzt, über das die Dämpfungskammer 39 nach der Montage des Schalters 1 mit dämpfendem Medium 34 befüllt wird. Der Dichtsitz des Ventils 54 verhindert ein Auslaufen des dämpfenden Mediums 34 nach dem Befüllen, wodurch über die gesammt Lebensdauer des Schalters 1 eine optimale Dämpfung gewährleistet ist.

## Patentansprüche

1. Elektrischer Schalter, insbesondere Lenkstockschalter für Kraftfahrzeuge, mit einem in einem Gehäuse um ein Lager verschwenkbaren, Schaltkontakte beeinflußenden Schalthebel, dem mindestens eine Schaltstellung zugeordnet ist, in die der Schalthebel unter der Wirkung einer Feder zurückgeführt und gehalten wird, dadurch gekennzeichnet, daß das Lager (7) des Schalthebels (13) mit einem die Schwenkbewegung des Schalthebels (13) dämpfenden Medium (34) benetzt ist.

2. Elektrischer Schalter nach Anspruch 1, dadurch gekennzeichnet, daß das dämpfende Medium (34) eine Flüssigkeit mit einer hohen kinematischen Zähigkeit ist.

3. Elektrischer Schalter nach Anspruch 1, dadurch gekennzeichnet, daß das dämpfende Medium (34) ein Fett mit einer hohen kinematischen Zähigkeit ist.

4. Elektrischer Schalter nach einem der Ansprüche 1 bis 3, dadurch gekennzeichnet, daß das Lager (7) des Schalthebels (13) aus konzentrisch angeordneten Gleitflächen (36) besteht, zwischen denen das dämpfende Medium (34) vorgesehen ist.

5. Elektrischer Schalter nach einem der Ansprüche 1 bis 4, dadurch gekennzeichnet, daß das Lager (7) des Schalthebels (13) aus die Führung des Schalthebels (13) bewirkenden Führungsflächen (37) und aus mindestens einer, das dämpfende Medium (34) aufnehmenden Dämpfungskammer (39) besteht, die von den Führungsflächen (37) gebildet wird.

6. Elektrischer Schalter nach einem der Ansprüche 1 bis 5, dadurch gekennzeichnet, daß die Dämpfungskammer (39) eine axiale Ausrichtung zum Lager (7) aufweist.

7. Elektrischer Schalter nach einem der Ansprüche 1 bis 6, dadurch gekennzeichnet, daß das Lager (7) des Schalthebels (13) aus konzentrisch ineinandergreifenden Gleitflächen (36) besteht, wobei zwischen den axialen Planflächen (43) der Gleitflächen (36) eine das dämpfende Medium (34) aufnehmende Dämpfungskammer (35) vorgesehen ist.

8. Elektrischer Schalter nach Anspruch 7, dadurch gekennzeichnet, daß in mindestens einer der beabstandeten Planflächen (43) der Gleitflächen (36) mindestens ein den Fluß des dämpfenden Mediums (34) einengender Dämpfungsspalt (44) vorhanden ist.

9. Elektrischer Schalter nach einem der Ansprüche 1 bis 5, dadurch gekennzeichnet, daß die Dämpfungskammer (39) eine punktsymmetrische Ausrichtung zum Lager (7) aufweist.

10. Elektrischer Schalter nach Anspruch 9, dadurch gekennzeichnet, daß in der Dämpfungskammer (39) mindestens ein radial verlaufender, den Fluß des dämpfenden Mediums (34) einengender Dämpfungsspalt (44) vorgesehen ist.

11. Elektrischer Schalter nach einem der Ansprüche 1 bis 10, dadurch gekennzeichnet, daß der Dämpfungsspalt (44) durch einen gehäuse- und/oder schalthebelfesten Ansatz (45) der beim Verschwenken des Schalthebels (13) einen gleichmäßigem Abstand zur gegenüberliegenden Gleitfläche (36) aufweist, gebildet ist.

12. Elektrischer Schalter nach einem der Ansprüche 1 bis 10, dadurch gekennzeichnet, daß der Dämpfungsspalt (44) durch einen gehäuse- und/oder schalthebelfesten Ansatz (45) der beim Verschwenken des Schalthebels (13) einen sich verändernden Abstand zur gegenüberliegenden Gleitfläche (36) einnimmt, gebildet ist.

13. Elektrischer Schalter nach Anspruch 11 oder 12, dadurch gekennzeichnet, daß der Ansatz (45) durch eine eine Spitze aufweisende Anformung gebildet ist.

14. Elektrischer Schalter nach Anspruch 11 oder 12, dadurch gekennzeichnet, daß der Ansatz (45) durch eine kontinuierlich verrundete Form eines Exzenters gebildet ist.

15. Elektrischer Schalter nach einem der Ansprüche 1 bis 14, dadurch gekennzeichnet, daß das Lager (7) des Schalthebels (13) aus zwei koaxial beabstandeten Lagerstellen (49) besteht.

16. Elektrischer Schalter nach Anspruch 15, dadurch gekennzeichnet, daß die Dämpfungskammern (39) und/oder die Dämpfungsspalten (44) in beiden Lagerstellen (49) und gleiche Ausrichtung aufweisen.

17. Elektrischer Schalter nach Anspruch 15, dadurch gekennzeichnet, daß die Dämpfungskammern (39) und/oder die Dämpfungsspalten (44) in beiden Lagerstellen (49) eine unterschiedliche Ausrichtung aufweisen.

18. Elektrischer Schalter nach einem der Ansprüche 1 bis 17, dadurch gekennzeichnet, daß die Dämpfungskammer (39) durch einen gehäusefesten, mittig den Ansatz (45) aufweisenden Kreisringabschnitt (50) gebildet ist, in den schalthebelfeste Kreissegmente (51) eintauchen, die das dämpfende Medium (34) durch den Dämpfungsspalt (44) von einer Teilkammer in die gegenüberliegende Teilkammer drücken.

19. Elektrischer Schalter nach einem der Ansprüche 1 bis 18, dadurch gekennzeichnet, daß das Lager (7) des Schalthebels (13) aus konzentrisch ineinandergreifenden Gleitflächen (36) besteht, wobei mindestens eine der Gleitflächen (36) axial ausgerichtete Nuten (63) besitzt.

20. Elektrischer Schalter nach einem der Ansprüche 1 bis 19, dadurch gekennzeichnet, daß beide Gleitflächen (36) mit Nuten (63) ausgerüstet sin, wobei die Nuten (63) einer Gleitfläche (36) schmaler als die Nuten (63) der gegenüberliegenden Gleitfläche (36) sind.

21. Elektrischer Schalter nach Anspruch 20, dadurch gekennzeichnet, daß an mindestens einer Gleitfläche (36) mindestens ein Dämpfungsbogen (64) angeformt ist, der in eine Nut (63) der gegenüberliegenden Gleitfläche (36) eintaucht.

22. Elektrischer Schalter nach einem der Ansprüche 1 bis 21, dadurch gekennzeichnet, daß die das dämpfende Medium (34) aufnehmenden und damit zusammenwirkenden Bauelemente aus Kunststoff bestehen und spritztechnisch hergestellt sind.

23. Elektrischer Schalter nach einem der Ansprüche 5 bis 19, dadurch gekennzeichnet, daß der Dämpfungskammer (39) ein Ventil (54) zugeordnet ist, über das die Dämpfungskammer (39) nach der Montage mit dem dämpfendem Medium (34) befüllt wird.

## Claims

1. Electrical switch, more especially a steering column switch for motor vehicles, having a switching lever which is pivotable about a bearing in a housing and influences switching contacts, at least one switching position being associated with said switching lever, into which position the switching lever is returned, and in which position it is retained, by the effect of a spring, characterised in that the bearing (7) of the switching lever (13) is wetted with a medium (34), which dampens the pivotal movement of the switching lever (13).

2. Electrical switch according to claim 1, characterised in that the damping medium (34) is a liquid with a high kinematic viscosity.

3. Electrical switch according to claim 1, characterised in that the damping medium (34) is a fat with a high kinematic viscosity.

4. Electrical switch according to one of claims 1 to 3, characterised in that the bearing (7) of the switching lever (13) comprises concentrically disposed sliding faces (36), between which the damping medium (34) is provided.

5. Electrical switch according to one of claims 1 to 4, characterised in that the bearing (7) of the switching lever (13) comprises guide faces (37), which effect the guidance of the switching lever (13), and at least one damping chamber (39), which accommodates the damping medium (34) and is formed from the guide faces (37).

6. Electrical switch according to one of claims 1 to 5, characterised in that the damping chamber (39) has an axial orientation relative to the bearing (7).

7. Electrical switch according to one of claims 1 to 6, characterised in that the bearing (7) of the switching lever (13) comprises sliding faces (36), which engage concentrically in one another, a damping chamber (35), which accommodates the damping medium (34), being provided between the axial planar faces (43) of the sliding faces (36).

8. Electrical switch according to claim 7, characterised in that at least one damping gap (44), restricting the flow of the damping medium (34), is provided in at least one of the spaced planar faces (43) of the sliding faces (36).

9. Electrical switch according to one of claims 1 to 5, characterised in that the damping chamber (39) has a point-symmetrical orientation relative to the bearing (7).

10. Electrical switch according to claim 9, characterised in that at least one damping gap (44), extending radially and restricting the flow of the damping medium (34), is provided in the damping chamber (39).

11. Electrical switch according to one of claims 1 to 10, characterised in that the damping gap (44) is formed by an extension (45), which is secured to the housing and/or to the switching lever and has a uniform spacing from the oppositely situated sliding face (36) during the pivotal movement of the switching lever (13).

12. Electrical switch according to one of claims 1 to 10, characterised in that the damping gap (44) is formed by an extension (45), which is secured to the housing and/or to the switching lever and occupies a varying spacing from the oppositely situated sliding face (36) during the pivotal movement of the switching lever (13).

13. Electrical switch according to claim 11 or 12, characterised in that the extension (45) is formed by a moulded-on portion having a pointed tip.

14. Electrical switch according to claim 11 or 12, characterised in that the extension (45) is formed by a continuously rounded configuration of an eccentric.

15. Electrical switch accordingto one of claims 1 to 14, characterised in that the bearing (7) of the switching lever (13) comprises two coaxially spaced bearing locations (49).

16. Electrical switch according to claim 15, characterised in that the damping chambers (39) and/or the damping gaps (44) have the same orientation in both bearing locations (49).

17. Electrical switch according to claim 15, characterised in that the damping chambers (39) and/or the damping gaps (44) have a different orientation in the two bearing locations (49).

18. Electrical switch according to one of claims 1 to 17, characterised in that the damping chamber (39) is formed by a circular ring portion (50), which is secured to the housing and has the extension (45) in the centre, into which portion circular segments (51), secured to the switching lever, extend and urge the damping medium (34) through the damping gap (44) from one partial chamber into the oppositely situated partial chamber.

19. Electrical switch according to one of claims 1 to 18, characterised in that the bearing (7) of the switching lever (13) comprises sliding faces (36), which engage concentrically in one another, at least one of the sliding faces (36) having axially orientated grooves (63).

20. Electrical switch according to one of claims 1 to 19, characterised in that both sliding faces (36) are provided with grooves (63), the grooves (63) of one sliding face (36) being narrower than the grooves (63) of the oppositely situated sliding face (36).

21. Electrical switch according to claim 20, characterised in that at least one damping arc (64) is provided on at least one sliding face (36) and extends into a groove (63) of the oppositely situated sliding face (36).

22. Electrical switch according to one of claims 1 to 21, characterised in that the structural elements which accommodate the damping medium (34) and co-operate therewith are formed from plastics material and are produced by injection-moulding.

23. Electrical switch according to one of claims 5 to 19, characterised in that a valve (54), via which the damping chamber (39) is filled with the damping medium (34) after assembly, is associated with the damping chamber (39).

## Revendications

1. Commutateur électrique, en particulier commutateur de colonne de direction pour véhicules, du type comportant un levier de commutation agissant sur les contacts de commutation monté basculant autour d'un palier dans un boîtier, et qui présente au moins une position de commutation dans laquelle le levier de commutation est ramené et maintenu sous l'action d'un ressort, **caractérisé en ce que** le palier (7) du levier de commutation (13) est baigné dans un milieu (34) amortissant le mouvement de basculement du levier de commutation (13).

2. Commutateur électrique selon la revendication 1, **caractérisé en ce que** le milieu amortissant (34) est un liquide possédant une viscosité cinématique élevée.

3. Commutateur électrique selon la revendication 1, **caractérisé en ce que** le milieu amortissant (34) est une graisse possédant une viscosité cinématique élevée.

4. Commutateur électrique selon l'une des revendications 1 à 3, **caractérisé en ce que** le palier (7) du levier de commutation (13) est constitué par des surfaces lisses ou glissantes (36) disposées concentriquement et entre lesquelles est disposé le milieu amortissant.

5. Commutateur électrique selon l'une des revendications 1 à 4, **caractérisé en ce que** le palier (7) du levier de commutation (13) est constitué par des surfaces de guidage (37) agissant sur le guidage du levier de commutation (13) et par au moins une chambre d'amortissement (39) contenant le milieu amortissant (34), qui est formée par les surfaces de guidage (37).

6. Commutateur électrique selon l'une des revendications 1 à 5, **caractérisé en ce que** la chambre d'amortissement (39) présente un alignement axial par rapport au palier (7).

7. Commutateur électrique selon l'une des revendications 1 à 6, **caractérisé en ce que** le palier (7) du levier de commutation (13) est constitué par des surfaces glissantes (36), concentriques, s'accrochant les unes aux autres, entre les surfaces planes axiales (43) desquelles est prévue une chambre d'amortissement (35) contenant le milieu amortissant (34).

8. Commutateur électrique selon la revendication 7, **caractérisé en ce que,** dans au moins une des surfaces planes écartées (43) des surfaces glissantes (36) est pratiquée au moins une fente d'amortissement (44) diminuant le flux du milieu amortissant (34).

9. Commutateur électrique selon l'une des revendications 1 à 5, **caractérisé en ce que** la chambre d'amortissement (39) présente un alignement respectant une symétrie ponctuelle par rapport au palier (7).

10. Commutateur électrique selon la revendication 9, **caractérisé en ce qu'**au moins une fente d'amortissement (44) s'étendant radialement est prévue dans la chambre d'amortissement (39), restreignant l'écoulement du milieu amortissant (34).

11. Commutateur électrique selon l'une des revendications 1 à 10, **caractérisé en ce que** la fente d'amortissement (44) est constituée par un appendice (45), solidaire du boîtier et/ou du levier de commutation (13), et qui, lors du basculement du levier de commutation, présente une distance constante par rapport à la surface glissante (36) lui faisant face.

12. Commutateur électrique selon l'une des revendications 1 à 10, **caractérisé en ce que** la fente d'amortissement (44) est constituée par un appendice (45), solidaire du boîtier et/ou du levier de commutation (13), et qui, lors du basculement du levier de commutation, prend une distance variable par rapport à la surface glissante (36) lui faisant face.

13. Commutateur électrique selon la revendication 11 ou 12, **caractérisé en ce que** l'appendice (45) est constitué par une déformation présentant une pointe.

14. Commutateur électrique selon la revendication 11 ou 12, **caractérisé en ce que** l'appendice (45) est constitué par la forme continuement arrondie d'un excentrique.

15. Commutateur électrique selon l'une des revendications 1 à 14, **caractérisé en ce que** le palier (7) du levier de commutation comporte deux positions d'appui (49) écartées coaxialement.

16. Commutateur électrique selon la revendication 15, **caractérisé en ce que** les chambres d'amortissement (39) et/ou les fentes d'amortissement (44) présentent dans les deux positions d'appui (49) le même alignement.

17. Commutateur électrique selon la revendication 15, **caractérisé en ce que** les chambres d'amortissement (39) et/ou les fentes d'amortissement (44) présentent dans les deux positions d'appui (49) un alignement différent.

18. Commutateur électrique selon l'une des revendications 1 à 17, **caractérisé en ce que** la chambre d'amortissement (39) est constituée par une section annulaire circulaire (50) solidaire du carter, présentant dans sa partie médiane l'appendice (45), dans laquelle plongent des segments circulaires (51) solidaires du levier d'amortissement, qui repoussent le milieu amortissant (34) par la fente d'amortissement (44) depuis une portion de chambre vers la portion de chambre située à l'opposé.

19. Commutateur électrique selon l'une des revendications 1 à 18, **caractérisé en ce que** le palier (7) du levier de commutation (13) se compose de surfaces glissantes concentriques s'accrochant les unes aux autres (36), au moins l'une des surfaces glissantes (36) présentant une rainure alignée axialement (63).

20. Commutateur électrique selon l'une des revendications 1 à 19, **caractérisé en ce que** les deux surfaces glissantes (26) comportent des rainures (63), les rainures (63) de l'une des surfaces glissantes (36) étant plus étroites que les rainures (63) de la surface glissante (36) qui est située en vis-à-vis.

21. Commutateur électrique selon la revendication 20, **caractérisé en ce qu'**au moins une surface glissante (36) est conformée pour présenter au moins un coude d'amortissement (64) qui pénètre dans une rainure (63) de la surface glissante (36) qui est située en vis-à-vis.

22. Commutateur électrique selon l'une des revendications 1 à 21, **caractérisé en ce que** les éléments constructifs recevant le milieu amortissant (34) et les éléments coopérant avec lui sont réalisés en matière plastique par injection.

23. Commutateur électrique selon l'une des revendications 5 à 19, **caractérisé en ce que** la chambre d'amortissement (39) est équipée d'une soupape (54), par laquelle la chambre d'amortissement est remplie de milieu amortissant (34) après le montage.
